# EUROPÄISCHE PATENTSCHRIFT

(11) **EP 2 859 531 B1**
(45) Veröffentlichungstag und Bekanntmachung des Hinweises auf die Patenterteilung: **01.08.2018**
(21) Anmeldenummer: 12727816.6
(22) Anmeldetag: 06.06.2012
(51) Int. Cl.: G06T 7/20

(54) **VERFAHREN ZUR BILDBASIERTEN VERÄNDERUNGSERKENNUNG**
METHOD FOR IMAGE-BASED ALTERATION RECOGNITION
PROCÉDÉ PERMETTANT DE DÉTECTER DES MODIFICATIONS À PARTIR D'IMAGES

(43) Veröffentlichungstag der Anmeldung: 15.04.2015
(73) Patentinhaber: Siemens Aktiengesellschaft, 80333 München (DE)
(72) Erfinder: BIRCHBAUER, Josef Alois, 8054 Seiersberg (AT); KLUCKNER, Stefan, Princeton New Jersey 08540 (US); WINDISCH, Claudia, 8565 St. Johann (AT)
(74) Vertreter: Maier, Daniel Oliver
(86) Internationale Anmeldenummer: PCT/EP2012/060629
(87) Internationale Veröffentlichungsnummer: WO 2013/182232

(56) Entgegenhaltungen:
- US-A1- 2007 025 595
- US-A1- 2008 291 081
- HYYPPA J ET AL: "Map updating and change detection using vehicle-based laser scanning", URBAN REMOTE SENSING EVENT, 2009 JOINT, IEEE, PISCATAWAY, NJ, USA, 20. Mai 2009 (2009-05-20), Seiten 1-6, XP031481580, ISBN: 978-1-4244-3460-2

## Beschreibung

### Technisches Gebiet

Die vorliegende Erfindung betrifft allgemein das Gebiet der so genannten Photogrammetrie sowie visuelle Bildinterpretation und digitale Bildverarbeitung. Im Speziellen bezieht sich die vorliegende Erfindung auf ein Verfahren zur bildbasierten Veränderungserkennung bei dreidimensionalen Objekten und/oder Oberflächenabschnitte auf Basis von für einen bestimmten Zeitpunkt generierte dreidimensionalen Modellen der jeweiligen Objekte bzw. Oberflächenabschnitte. Dabei wird ein dreidimensionales Modell für ein Objekt bzw. einen Oberflächenabschnitte aus mehreren, digitalen Bildaufnahmen erstellt. Zusätzlich ist für dieses Objekt oder diesen Oberflächenabschnitt ein Referenzmodell als Vergleichsbasis vorgesehen.

### Stand der Technik

Die so genannte Photogrammetrie ist eine Gesamtheit von Verfahren, um beispielsweise Informationen über die Erdoberfläche oder über andere nicht direkt zugängliche Objekte zu gewinnen. Bei der so genannten Photogrammetrie werden Objekte und/oder Oberflächenabschnitt (z.B. der Erde) - im Gegensatz zu anderen Erfassungsmethoden - berührungsfrei erkundet. Eine berührungsfreie Beobachtung dieser Objekte und/oder Oberflächenabschnitt wird dabei z.B. durch flugkörpergetragene (z.B. von Flugzeugen, Drohnen, etc.) oder satellitengetragene Sensoren wie z.B. Kameras, Scanners, etc. ermöglicht. Von diesen Sensoren werden dann beispielsweise für eine weitere Verarbeitung so genannten Überflugsdaten, Luftbildaufnahmen, Objektaufnahmen, etc., welche Eigenschaften und/oder Strukturen des Objektes bzw. des Oberflächenabschnitts zu einem bestimmten Zeitpunkt dokumentieren geliefert.

Um Veränderungen bei aufgenommen Objekten bzw. Oberflächenstrukturen feststellen und dokumentieren zu können, werden beispielsweise Verfahren der fernerkundlichen Veränderungsdetektion eingesetzt. Dabei werden Veränderungen eines Zustandes eines Objektes bzw. eines Oberflächenabschnittes (z.B. der Erdoberfläche, eines Landabschnitts, eines Stadtgebiets, eines Gebäudes, etc.) zwischen zwei oder mehreren aufeinanderfolgenden Bildaufnahmen bzw. daraus generierten dreidimensionalen Modellen dieses Objektes bzw. dieses Oberflächenabschnittes. Die Erfassung und Detektion dieser Veränderungen kann dabei sowohl visuell z.B. mittels visueller Bildinterpretation als auch unter Zuhilfenahme der digitalen Bildverarbeitung erfolgen.

US 2007/025595 A1 gibt hierfür ein Beispiel. Um bei dreidimensionalen Objekten und/oder Oberflächenabschnitten sichtbare Veränderungen automatisch über Farb- oder geometrische Daten oder über beide Modalitäten (d.h. Farbe und Geometrie) erkennen zu können, werden beispielsweise für bestimmte, definierte Zeitpunkt dreidimensionale Modelle dieser Objekte bzw. Oberflächenabschnitte in Form von so genannten Punktwolken generiert. Dabei werden z.B. mehrere Bildaufnahmen des Objektes bzw. des Oberflächenabschnitts, welche zu einem bestimmten Zeitpunkt oder z.B. über einen bestimmten Zeitraum (z.B. einen Tag) gemacht worden sind, übereinandergelegt. Damit können dann großflächige dreidimensionale Modelle z.B. auf Tagesbasis, etc. beispielsweise in Form von so genannten xyzRGB-Punktszenenbeobachtungen des Objektes oder des Oberflächenabschnitts erzeugt werden.

Diese xyzRGB-Punktszenebeobachtungen sind üblicherweise eine Punktwolke, in welcher jeder Punkt aus xyz-Koordinaten, welche durch ein lokales oder ein globales Weltkoordinatensystem definiert werden, sowie Farbinformationen (z.B. Rot-, Blau- und Grünwerte oder andere Farbräume) zusammengesetzt ist. Eine Punktwolke ist dabei eine Menge von Punkten - d.h. diskreten Werten, welche vollständig oder zumindest überwiegend in einer gewissen Umgebung liegen. In der dreidimensionalen Computergrafik bzw. Bildverarbeitung bezeichnet eine Punktwolke eine Liste von kartesischen dreidimensionalen Koordinaten - d.h. x-, y- und z-Werten. Bei einem xyzRGB-Punkt werden zu den kartesischen dreidimensionalen Koordinaten noch Farbinformationen ergänzt. Zusätzlich können derartige Punkte eines dreidimensionalen Objekt- und/oder Oberflächenabschnittsmodells noch mit weiteren Attributen von zusätzlichen Aufnahmequellen (z.B. Infrarotaufnahmen, Struktur- oder Beschaffenheitsinformation, Ergebnissen von Erkennungsverfahren, etc.) ergänzt und angereichert werden. Bekannt sind derartige Punktwolken beispielsweise aus der Schrift Hyyppä J. et al: "Map Updating and Change Detection Using Vehicle-Based Laser Scanning", Urban Remote Sensing Joint Event, 2009, IEEE, Piscataway, NJ, USA, 20. Mai 2009, Seiten 1-6, XP031481580, ISBN: 978-1-4244-3460-2.

Anhand derartiger dreidimensionaler Objektmodelle, insbesondere anhand von xyzRGB-Punktszenebeobachtungen, können sichtbare Änderungen eines Objektes oder eines Oberflächenabschnitts automatisch anhand von geometrischen und/oder Farbinformationen festgestellt werden. Im Besonderen, können durch ein Feststellen von Änderungen bei Objekten und/oder Oberflächenabschnitten auf Basis der geometrischen Daten Probleme beim Erkennen dieser Veränderungen aufgrund von unterschiedlicher natürlicher Beleuchtung (z.B. Schattenwirkung, etc.) oder aufgrund von kurzzeitigen Bewegungen beseitigt werden. Allerdings müssen dazu auch die Farbinformationen berücksichtigt werden. Daher müssen für repräsentative dreidimensionale Modelle und ein Erkennen von Veränderungen immer beide Informationen - d.h. geometrische Daten und Farbinformationen - herangezogen werden. Ein digitale Verarbeitung sowie ein Vergleichen dieser dreidimensionalen Modelle sind daher sehr komplex und erfordern einen großen Aufwand an Hardware (z.B. Speicherplatz, Rechnerleistung, etc.), komplexe und rechnerintensive Vergleichsverfahren und entsprechend qualitativ hochwertige Aufnahmen der jeweiligen Objekte.

Rekonstruierte dreidimensionale Modelle werden beispielsweise in Form von 3D-Punktwolken abgelegt und verarbeitet. Weiterhin weist eine Berechnung von Gemeinsamkeiten und/oder Abweichungen von redundanten Daten in einem dreidimensionalen Modell oder in einem zeitbasierten dreidimensionalen Modell, welche für ein Erkennen von Veränderungen eines Objektes bzw. eines Oberflächenabschnitts zwischen zwei oder mehreren Zeitpunkten notwendig ist, zusätzlich die Schwierigkeit auf, dass manche Bereiche von Attributen unbekannt sind, oder dass isolierte Vorkommnisse, Störflecken, Verdeckungen oder Artifakte aufgrund von natürlichen Bewegungen (z.B. Schatten, Schattenwirkung, etc.) vorhanden sein können. Diese können dann nicht dichte Punktwolken bzw. unklare Stellen in einem dreidimensionalen Modell verursachen und zu Fehlinterpretationen bei den Veränderungen führen - zusätzlich zum Problem von beschränktem Speicherplatz und begrenzter Rechnerleistung.

Aus der Schrift "Strecha, Ch., Van Gool, L., Fua, P.; A generative Model for true Orthorectification. Int. Archives of Photogrammetry and Remote Sensing 37, 2008" ist ein Verfahren bekannt, durch welches perspektivische Bilder (z.B. Luftaufnahmen) zu dreidimensionalen Bildern zusammengesetzt bzw. berechnet werden. Diese werden bei einer Pixel- bzw. Bildpunkt-Auflösung von ungefähr 15 bis 100 cm im Bereich der Bildvermessung generiert. Allerdings ist dieses Verfahren beschränkt auf eine so genannte Nadir-Ansicht, wobei Nadir in der Geometrie einen in dem Zenit gegenüberliegenden Fußpunkt bezeichnet, und die Bilder basieren hauptsächlich auf einem Zufügen und/oder Mischen von Einzelaufnahmen. Die durch dieses Verfahren erhaltenen Resultate werden beispielsweise für Visualisierungen wie z.B. Google-Maps, etc. oder für einfache Berechnungen von Veränderungen bei Objekten bzw. Oberflächenabschnitten eingesetzt. Dabei werden allerdings entweder nur Abweichungen in der Farbe oder Abweichungen in der Geometrie ermittelt. Eine Kombination von beiden Informationen wird durch dieses Verfahren nicht durchgeführt.

In der Computergrafik werden üblicherweise Bildaufnahmen basierte Ansätze zum Generieren von dreidimensionalen Modellen eines Objektes oder eines Oberflächenabschnitts eingesetzt, um dreidimensionale Eindrücke von Objekten, etc. zu generieren und um zeitliche Veränderungen darzustellen - wie z.B. in der Schrift "Fitzgibbon, A., Wexler, Y., Zisserman, A.; Image-based rendering using image-based priors.; Proc. Int. Conf. On Comp. Vision, 2003." beschrieben. Dabei werden bei dem in der angeführten Schrift offenbarten Verfahren insbesondere verdeckte Regionen berücksichtigt, während hingegen vorhandene Redundanzen nicht in Betracht gezogen werden. Damit erfordern ein konsistentes dreidimensionales Modell bzw. ein zeitbasiertes dreidimensionales Modell eines Objektes bzw. eines Oberflächenabschnitts sowie ein Bestimmen von Veränderungen anhand dieses Modells, welches auf Basis mehrerer Bildquellen erstellt worden ist, eine Darstellung und Verarbeitung in Form von Voxel mit spezifisch umfassender Abfrage bzw. Sampling. Daher ist dieser Ansatz, wie z.B. in der angeführten Schrift dargestellt, nur für kleinräumige Objekte oder Oberflächenabschnitt mit geringen geometrischen Daten geeignet, da insbesondere die Berechnung von Änderungen z.B. komplexe Algorithmen, ein sehr große Rechnerleistung und damit treue Hardware voraussetzen würden.

Zum Organisieren, Handhaben und Evaluieren von großflächigen dreidimensionalen Punktwolken werden z.B. so genannte Octree-Darstellungen verwendet. Ein Octree ist dabei eine Datenstruktur der Informatik, welche beispielsweise hauptsächlich in der Computergrafik verwendet wird, um dreidimensionale Datensätze hierarchisch zu untergliedern. Von einer so genannten Wurzel werden dabei alle Daten repräsentiert und von jedem anderen Knoten wird ein so genannter Oktant der Daten seines direkten Vorgängers dargestellt. Octrees werden allgemein vor allem z.B. in der Bildpräsentation, Raumindizierung, bei der Kollisionserkennung von 3D-Computerspielen, etc. eingesetzt. Allerdings wird bei Octree-Darstellungen von dreidimensionalen Modellen eine nutzvolle Menge von redundanten Aufnahme- und Beobachtungsdaten aufgrund einer Komprimierung nicht berücksichtigt und kann daher bei der weiteren Verarbeitung nicht mehr genutzt werden.

Im Prinzip können zwar einfache Berechnungen von Veränderungen von Objekten und/oder Oberflächenabschnitten - insbesondere in Farbe und/oder Geometrie - zwischen dreidimensionale Modelle dieser Objekte bzw. Oberflächenabschnitte in dreidimensionaler Voxel-Darstellung ermittelt werden. Allerdings ist eine passende Darstellung für eine einfache Anwendung von z.B. Algorithmen und Verfahren der fernerkundlichen Veränderungsdetektion oder Change Detection oder der semantische Interpretation, welche zusätzlich mit dreidimensionaler Kontextinformation angereichert sind, sowie eine Kombination der beteiligten Modalitäten (z.B. Farbe, Geometrie, etc.) mit den bekannten Verfahren nur schwer ohne dreidimensionale Modelle mit hohem Speicherbedarf, komplexen Sampling-Ergebnissen und hoher Rechnerleistung zu erzielen.

### Darstellung der Erfindung

Der Erfindung liegt daher die Aufgabe zugrunde, ein Verfahren zur bildbasierten Veränderungserkennung bei dreidimensionalen Objekten und/oder Oberflächenabschnitten anzugeben, bei welchem auf einfache Weise Veränderungen der Objekte bzw. Oberflächenabschnitte unter Berücksichtigung der beteiligten Modalitäten mit geringem Speicheraufwand und geringer Rechnerleistung ermittelt werden.

Die Lösung dieser Aufgabe erfolgt, durch ein Verfahren der eingangs angegebenen Art, bei welchem in Abhängigkeit von einem interessanten Ausschnitt des zu untersuchenden Objektes oder Oberflächenabschnitts oder in Abhängigkeit von einer geforderten Abtast-Distanz ein Blickpunkt auf das dreidimensionale Modell eines Objektes bzw. eines Oberflächenabschnitts definiert wird. Für diesen Blickpunkt wird dann eine 2.5D-Ansicht des Objektes bzw. des Oberflächenabschnitts generiert - in Form eines kartesischen Datensatzes mit Datenattributen für jeden Datenpunkt. In diesem Datensatz werden neben zweidimensionalen Koordinatenwerten für den jeweiligen Datenpunkt auch ein aus dem dreidimensionalen Modell abgeleiteter Farbwert sowie ein aus dem dreidimensionalen Modell abgeleiteter Tiefenwert als Datenattribute für einen jeweiligen Datenpunkt erfasst. Dann werden die jeweiligen Datenattribute des jeweiligen Datenpunktes herangezogen und mit den entsprechenden Daten aus einem Referenzmodell verglichen.

Der Hauptaspekt des erfindungsgemäßen Verfahrens besteht darin, dass eine Veränderungserkennung ausgehend von redundanten Beobachtungen bzw. Bildaufnahmen für Farbe und Geometrie, insbesondere Tiefenwerte für die Objekte bzw. Oberflächenabschnitte durchgeführt werden kann. Durch die Datensätze, durch welche ein dreidimensionales Modell eines Objektes bzw. eines Oberflächenabschnitts in der 2.5D-Darstellung repräsentiert wird, wird die Komplexität, der Speicherbedarf sowie die Rechnerleistung bei der Berechnung von Veränderungen wesentlich reduziert. Es besteht damit keine Notwendigkeit eine Ermittlung von Veränderungen des Objektes gegenüber einem Referenzmodell in der dritten Dimension durchzuführen. Damit können beispielsweise bei der Ermittlung und Berechung von Veränderungen gängige Algorithmen - wie z.B. aus der zweidimensionalen Veränderungserkennung - eingesetzt werden.

Durch die Abbildung des dreidimensionalen Modells des Objektes bzw. Oberflächenabschnitts in Form von Datensätzen, welche geometrische und farbliche Informationen als Datenattribute umfassen, können auf einfache Weise Veränderungen aufgrund von natürlichen Ursachen (z.B. variabler Beleuchtung, Schattenwirkungen, kurzzeitige Bewegungen, etc.) sicher und technisch ausgereift abgeschätzt werden. Die wesentlichen bzw. gesuchten Veränderungen des jeweiligen Objektes oder Oberflächenabschnitts können dann beispielsweise mit Hilfe von einfachen 2D-basierten Algorithmen (z.B. Differenz-Metrik, gewichtete Mittelwerte, Statistik über den jeweiligen Datenpunkte, etc.), welche sehr einfach auf die Datensätze bzw. die 2.5D-Ansicht des Objektes bzw. Oberflächenabschnitt anpassbar sind, ermittelt werden. Im einfachsten Fall können Veränderungen eines Objektes oder Oberflächenabschnitts während eines Aufnahmezeitraums aufgrund des erfindungsgemäßen Verfahrens mittels so genannter Abweichungsdarstellungen ermittelt und dargestellt werden, welche gemeinsam aus geografischen und farblichen Abweichungen (z.B. gewichtete Summen der Koordinaten und/oder Farbwerte, etc.) berechnet werden.

Da durch das erfindungsgemäße Verfahren - insbesondere durch die generierten Datensätze zu den jeweiligen Datenpunkten - sowohl Farb- als auch Geometrie-Informationen eng verknüpft zur Verfügung stehen, können Veränderungen von Objekten bzw.

Oberflächenabschnitten sehr einfach und sicher für verschiedene Zeitpunkte sowie unterschiedliche Maßstäbe bzw. Bildauflösungen berechnet bzw. festgestellt werden. Die Daten bzw. Veränderungsinformationen können durch das erfindungsgemäße Verfahren zeitabhängig sowie in feinen oder groben Auslösungen ermittelt werden. Dies ist insbesondere wichtig, wenn Daten, insbesondere für eine ermittelte Veränderung, z.B. mit Systeme und/oder Anwendungen zur Gebäudedaten-Modellierung, welche eine Methode einer optimierten Planung, Ausführung und Bewirtschaftung von Gebäuden mit Hilfe von Software darstellt, oder mit so genannten Product Life-Cycle Management-(PLM)-Systemen ausgetauscht werden sollen. Bei diesen Systemen und/oder Anwendungen ist eine Abstraktion der Ansichten eines Objektes, Oberflächenabschnitts und/oder der jeweils ermittelten Veränderungen auf ein bestimmtes, vorgegebenes Detailniveau von großer Wichtigkeit und Interesse. Durch das erfindungsgemäße Verfahren wird es möglich, insbesondere eine 2.5D-Ansicht von dreidimensionalen Objekten, Oberflächenabschnitten und/oder deren Veränderungen nach Vorgaben von Benutzern, etc. zu erstellen. Weiterhin können diese 2.5-Ansichten auch sehr einfach wieder in eine dreidimensionale Darstellung zurückprojiziert werden, da in den Datensätzen für jeden Datenpunkt insbesondere die geometrischen Informationen hinterlegt sind.

Es ist vorteilhaft, wenn für einen Vergleich der jeweiligen Datensätze der Datenpunkte mit den jeweiligen Daten aus dem Referenzmodell Klassifikationsalgorithmen zur Veränderungsanalyse bzw. zur so genannte Change Detection verwendet werden. Durch die Darstellung des dreidimensionalen Modells des Objektes bzw. Oberflächenabschnitts in Form von Datensätzen, welche eine 2.5D-Darstellung des Objektes bzw. Oberflächenabschnitts bilden, können auf einfache Weise bekannte Verfahren und Algorithmen der Bildverarbeitung und/oder Bilderkennung angewendet werden, wie sie für zweidimensionalen Bildaufnahmen bekannt sind - insbesondere Klassifikationsalgorithmen zur so genannte Change Detection. Durch diese Algorithmen werden Veränderungen an Objekten bzw. bei Oberflächenabschnitten visuell als auch unter Zuhilfenahme der digitalen Bildverarbeitung ermittelt und festgestellt. Bei der Change Detection wird beispielsweise anhand von Bildaufnahmen untersucht, wie sich bestimmte Attribute eines bestimmten Objektes bzw. Oberflächenabschnitts (z.B. Abschnitt der Erdoberfläche, Landschaftsgebiet, etc.) zwischen zwei oder mehreren Zeitperioden verändert hat. Change Detection wird z.B. häufig bei Umweltbeobachtungen, natürlichem Ressourcenmanagement oder zu Abschätzen von urbanen Entwicklungen eingesetzt.

Es ist weiterhin günstig, wenn für das Generieren der jeweiligen Datensätze mehrere dreidimensionale Modelle des Objektes bzw. des Oberflächenabschnitts herangezogen werden und vom gleichen, definierten Blickpunkt betrachtet werden. Die daraus abgeleiteten 2.5D-Ansichten werden dann idealer Weise übereinandergelegt und/oder fusioniert. Auf diese Weise können beispielsweise natürliche Störungen wie z.B. Vedeckungen, Überschneidungen von Objekten, Schattenwirkungen oder variierende Lichtverhältnisse erkannt werden. Es wird damit verhindert, dass diese fälschlicher Weise als Veränderungen des Objektes bzw. Oberflächenabschnitts identifiziert werden.

Es empfiehlt sich, wenn der Blickpunkt für das Generieren der 2.5D-Ansicht als virtuelle Kameraposition und/oder Benutzerblickrichtung definiert wird. Durch das Festlegen einer virtuellen Kameraposition und/oder einer virtuellen Benutzerblickrichtung für den Blickpunkt, von welchem aus die 2.5D-Ansicht aus dem dreidimensionalen Modell abgeleitet wird, können die Datenpunkte bzw. auch die zugehörigen Datensätze ohne optische Verzerrungen aus dem dreidimensionalen Modell generiert werden. Da beim Erstellen des dreidimensionalen Modells aus mehreren Bildaufnahmen jeder Punkt des jeweiligen Objektes bzw. Oberflächenabschnitts mehrfach gemappt wird, sind redundante Daten und/oder Messwerte (z.B. Farbe, Tiefe, Textur, etc.) für die Datenpunkte der 2.5D-Ansicht verfügbar, damit können neben Verzerrungen auch Störungen und/oder undefinierte Gebiete z.B. aufgrund von verdeckten Bereichen in der 2.5D-Ansicht verhindert werden.

Alternativ kann es daher auch günstig sein, wenn der Blickpunkt für das Generieren der 2.5D-Ansicht aus einer der geschätzten Kamerapositionen, mit welchen z.B. Bildaufnahmen für das dreidimensionale Modell aufgenommen worden sind, beispielsweise manuell ausgewählt wird.

Es ist auch zweckmäßiger Weise vorgesehen, dass der Farbwert im jeweiligen Datensatz eines Datenpunktes der 2.5D-Ansicht als Hell-Dunkelwert oder als so genannter RGB-Wert abgelegt wird. Hell-Dunkelwerte können dabei insbesondere für einfärbige Aufnahmen eingesetzt werden, um Kontraste, Farbunterschiede, etc. beim zu untersuchenden Objekt bzw. Oberflächenabschnitt sichtbar zu machen. Bei farbigen Aufnahmen kann der Farbwert z.B. als RGB-Wert hinterlegt werden. Bei einem RGB-Wert wird eine Farbwahrnehmung durch ein additives Mischen dreier Grundfarben (z.B. Rot, Grün und Blau oder aus einem anderen Farbraum) nachgebildet. Dieser Mischwert der drei Grundfarben wird dann im Farbwert des jeweiligen Datensatzes des Datenpunktes hinterlegt und kann dann sehr einfach mit dem Farbwert des Referenzmodells verglichen werden.

### Kurzbeschreibung der Zeichnung

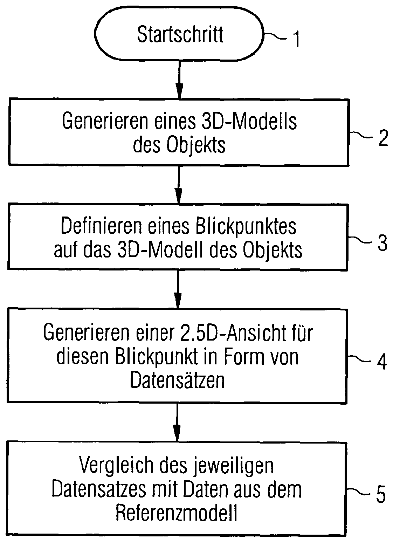

Die Erfindung wird nachfolgend schematisch in beispielhafter Weise anhand der beigefügten Figur erläutert. Figur 1 zeigt dabei schematisch einen beispielhaften Ablauf des erfindungsgemäßen Verfahrens zur bildbasierten Veränderungserkennung bei dreidimensionalen Objekten und/oder Oberflächenabschnitten.

### Ausführung der Erfindung

Figur 1 zeigt in schematischer Weise einen beispielhaften Ablauf des erfindungsgemäßen Verfahrens zur bildbasierten Veränderungserkennung. Das erfindungsgemäße Verfahren beginnt mit einem Startschritt 1. Dann wird in einem zweiten Verfahrensschritt 2 ein dreidimensionales Modell für ein Objekt bzw. einen Oberflächenabschnitt für einen bestimmten Zeitpunkt oder eine bestimmte Zeitspanne in Form einer Punktwolke generiert. Dieses dreidimensionale Modell bzw. Punktwolke kann beispielsweise aus mehreren, überlappenden Bildaufnahmen des jeweiligen Objektes bzw. Oberflächenabschnitts. Diese Bildaufnahmen können beispielsweise von Aufnahmen mittels einem Aufnahmegerät (z.B. Kamera, Scanner, etc.), welches z.B. in einem Flugzeug, einer Drohne oder Satelliten angebracht ist, gemacht und z.B. als Luftbildaufnahmen, Überflugsdaten, etc. zur Verfügung gestellt werden.

Durch eine gegebenenfalls vorhandene Überlappung weisen die Bildaufnahmen für das Erstellen des dreidimensionalen Modells des Objektes bzw. Oberflächenabschnitts eine hohe Redundanz auf. Daher kann beispielsweise der so genannte Structure from Motion-Ansatz gewählt werden, um geometrische Daten der jeweiligen, aufgenommenen Szenerie sowie Aufnahmegerät-Positionen abzuschätzen. Der Structure from Motion-Ansatz bezieht sich dabei auf eine Methode bzw. Prozess zum Finden von dreidimensionalen Strukturen eines aufgenommenen Objektes bzw. Oberflächenabschnitts durch Analyse von lokalen Bewegungssignalen über einen Zeitverlauf. Beim Structure from Motion-Ansatz wird ähnlich vorgegangen, wie z.B. Menschen oder Tiere dreidimensionale Strukturen eines bewegten Objektes durch eine Projektion auf ein zweidimensionales Bewegungsfeld (z.B. Retina) wahrgenommen werden.

Durch ausreichende Kenntnis von zum zu untersuchenden Objekt bzw. Oberflächenabschnitt benachbarten Ansichten und zusätzlichem Bekanntsein der Überlappungen sowie der relativen Positionen des jeweiligen Aufnahmegeräts können beispielsweise mit Hilfe der so genannten Plane-Sweeping-Technik, bei welcher gute Anfangsdaten - insbesondere für die Geometrie des Objektes bzw. des Oberflächenabschnitts in den jeweiligen Bildaufnahmen gewonnen werden. Diese geometrischen Daten können dann sehr einfach für das Generieren des dreidimensionalen Modells des Objektes bzw. des Oberflächenabschnitts als dreidimensionale Punktwolke, insbesondere als so genannte xyzRGB-Punktwolke, herangezogen werden.

Weiterhin wird im zweiten Verfahrensschritt 2 das generierte dreidimensionale Modell des Objektes bzw. des Oberflächenabschnitts entsprechend registriert, um z.B. Veränderungen eines beobachteten Objektes bzw. Oberflächenabschnitts über eine bestimmte Zeitdauer feststellen zu können. D.h. für bestimmte Zeitpunkte oder -abschnitte erstellte dreidimensionale Modelle können für später generierte Modelle eines Objektes oder Oberflächenabschnitts als Referenzmodell herangezogen werden. Für eine korrekte Registrierung der zeitabhängigen dreidimensionalen Modelle und um Bildausnahmen bzw. zeitliche dreidimensionale Modelle in richtigen Bezug zueinander zu setzen, werden für eine richtige Anordnung so genannte Schlüssel-Deskriptoren, welche im zeitlichen Ablauf konstant geblieben sind, gesucht. Dazu können insbesondere Bildaufnahmen herangezogen werden, welche von einer größeren Distanz aufgenommen worden sind, da von diesen z.B. ausreichende Informationen zur Verfügung gestellt werden, um solche Schlüssel-Deskriptoren bzw. korrespondierende Kontrollpunkte für eine korrekter Registrierung der Bildaufnahmen wie der daraus generierten dreidimensionalen Modelle zu finden.

Dabei kann beispielsweise ein Algorithmus, welcher in der Schrift Horn, Berthold K. P., Closed-form Solution of Absolute Orientation Using Unit Quaternions., Journal of the Optical Society of America, 2007. beschrieben wurde, herangezogen werden. Durch diesen Algorithmus wird eine Projektionsmatrix angegeben, um die zeitlichen dreidimensionalen Modelle zu vordefinierten Referenzdaten wie z.B. einem Referenzmodell zu mappen. Als Referenzmodell können dabei beispielsweise Daten auf Basis der ersten Bildaufnahmen eine Objektes bzw. Oberflächenabschnitte in einer zeitlichen Reihenfolge bzw. Abfolge herangezogen werden. Der Ausgangspunkt für die weiteren Verfahrensschritte 3 bis 5 des erfindungsgemäßen Verfahrens wird daher von einem dreidimensionalen Modell des Objektes bzw. des Oberflächenabschnitts in Form einer dreidimensionalen Punktwolke gebildet, von welcher ausgehend zweidimensionale Ansichten des Objektes mit zugehörigen räumlich abgestimmten Datensätzen berechnet werden.

In einem dritten Verfahrensschritt 3 wird dann z.B. in Abhängigkeit von einem interessanten Ausschnitt des zu untersuchenden Objektes oder Oberflächenabschnitt oder in Abhängigkeit von einer geforderten Abtast-Distanz (z.B. aufgrund einer erwarteten Pixelgröße in einer zu generierenden Ansicht) ein virtueller bzw. synthetischer Blickpunkt auf das dreidimensionale Modell des Objektes bzw. Oberflächenabschnitts definiert. Dieser Blickpunkt kann entweder eine virtuell erzeugte Kameraposition oder eine virtuell generierte Blickrichtung (z.B. eines Benutzers) sein oder ein realer Blickpunkt, welcher z.B. aus geschätzten, realen Positionen von Aufnahmegeräten (z.B. Kamera, etc.) ausgewählt wird.

In einem vierten Verfahrensschritt 4 wird dann für den im dritten Verfahrensschritt 3 ausgewählten Blickpunkt eine 2.5D-Ansicht des Objektes bzw. Oberflächenabschnitts in Form von Datensätzen je Datenpunkt der 2.5D-Ansicht generiert. Dieser Datenpunkt-spezifische Datensatz umfasst neben zweidimensionalen Koordinatenwerten (z.B. x-Wert, y-Wert in einem Weltkoordinatensystem oder in einem bildspezifischen Koordinatensystem) einen aus dem dreidimensionalen Modell abgeleiteten Farbwert und einen aus dem dreidimensionalen Modell abgeleiteten Tiefenwert als Datenattribute für den jeweiligen Datenpunkt. Gegebenenfalls können auch noch weitere Werte wie z.B. für Textur, etc. im Datensatz vorgesehen sein. Der Farbwert kann im Datensatz beispielsweise als Hell-Dunkel-Wert (d.h. in Grauschattierungen) oder als so genannter RGB-Wert (d.h. als eine Kombination aus Rot-, Grün- und Blauwerten, welche additiv eine Farbe ergeben) abgespeichert sein. Der Tiefenwert kann beispielsweise als skalare Distanz zwischen der Position des gewählten Blickpunkts (z.B. Kamerazentrum, etc.) und dem beobachteten dreidimensionalen Punkt des dreidimensionalen Modells gesehen werden. In einem orthogonalen Koordinatensystem würde der Tiefenwert damit z.B. einem negativen Wert auf der z-Koordinatenachse entsprechen.

Aufgrund von konstanten Pixelgrößen über die Kamerafläche wird z.B. mittels einer so genannten orthogonalen Projektion eine geeignete zweidimensionale Darstellung bzw. Ansicht des Objektes bzw. des Oberflächenabschnitts für den gewählten Blickpunkt als Basis für eine Beurteilung von Veränderungen des Objektes bzw. Oberflächenabschnitts erstellt. Insbesondere da dichte und redundante Bereichsinformationen (z.B. für die geografischen Daten) in einem allgemeinen Weltkoordinatensystem - z.B. aus dem dreidimensionalen Modell bzw. den zugrundeliegenden Bildaufnahmen - verfügbar sind, kann die 2.5D-Ansicht für den definierten oder gewählten Blickpunkt z.B. unter Berücksichtigung der geschätzten oder virtuellen Kameraposition ohne Verzerrungen erzeugt werden. Da jeder Punkt des dreidimensionalen Modells bzw. der Punktwolke aus mehreren Bildaufnahmen generiert und damit mehrfach gemappt wurde, stehen für die Datenpunkte der 2.5D-Ansicht des Objekt vom definierten Blickpunkt aus redundante Messwerte in Bezug auf Farbe, Tiefe, Textur, etc. zur Verfügung. Diese Messwerte werden dann beispielsweise effizient und konsistent in die 2.5D-Ansicht des Objektes bzw. Oberflächenabschnitts eingeordnet und können im jeweiligen Datensatz für den jeweiligen Datenpunkt hinterlegt werden. Damit können z.B. Störeffekte und unbestimmte Bereiche (z.B. aufgrund von Überschneidungen, Verdeckungen) in der 2.5D-Ansicht bzw. in den zugehörigen Datensätzen reduziert und/oder verhindert werden.

Um beispielsweise natürliche Störeffekte wie z.B. variierende Beleuchtungsverhältnisse, Schattenwirkungen, etc. reduzieren zu können bzw. besser von tatsächlichen Veränderungen des Objektes bzw. der Oberflächenstruktur unterscheiden zu können, können optional mehrere Beobachtungen und daraus abgeleitete dreidimensionale Modelle des Objektes bzw. Oberflächenabschnitts fusioniert werden, wobei das Objekt bzw. der Oberflächenabschnitt z.B. zu unterschiedlichen Zeitpunkten/- abschnitten (z.B. Tageszeiten, Jahreszeiten, etc.) beobachtet und aufgenommen wird. Es werden dann beispielsweise für diese Zeitpunkte dreidimensionale Modelle erstellt und daraus dann gemäß dem dritten und vierten Verfahrensschritt 3, 4 2.5D-Ansichten für einen definierten Blickpunkt erstellt und für jeden Datenpunkt Datensätze mit zumindest Koordinatenwerten, Farbwert und Tiefenwert abgeleitet. Diese Datensätze können dann zu einem Datensatz für eine redundante, zweidimensionale bzw. 2.5D-Beobachtung des Objektes bzw. Oberflächenabschnitt fusioniert bzw. zusammengeführt werden. Auf diese Weise können z.B. Ansichten auf Basis von unvollständige oder gestörte Dateninformationen rekonstruiert werden. Es werden glatte und konsistente Darstellungen des zu beobachtenden Objektes bzw. Oberflächenabschnitts in der Darstellung durch Datenpunkte mit Datensätzen erzielt. Diese Darstellung stellt im Prinzip eine so genannte 2.5D-Darstellung dar, da zu jedem Datenpunkt zusätzlich neben x- und y-Koordinate und einem Farbwert auch ein Tiefenwert hinterlegt ist. Weiterhin kann noch ein Zeitwert - ein so genannter Zeitstempel - im Datensatz oder für die jeweilige 2.5D-Ansicht gespeichert werden.

Aus dem dritten und vierten Verfahrensschritt 3, 4 bzw. nach einer optionalen Fusion von mehreren Beobachtungen ergibt sich eine entsprechende Merkmalskarten-Darstellung des Objektes bzw. des Oberflächenabschnitts, welche aus Datensätzen mit Koordinatenwerten (x-Koordinate, y-Koordinate), Farb-, Tiefen- und gegebenenfalls Zeitinformation für jeden Datenpunkt besteht. In Abhängigkeit von der jeweiligen Sampling-Distanz, welche typischer Weise feiner als eine verfügbare geometrische Bildauflösung sein kann, können für eine Zeitpunkt aus der Merkmalskarten-Darstellung des Objektes bzw. Oberflächenabschnitts entsprechende geometrische und optische Informationen ermittelt werden.

Die Merkmalskarten-Darstellung - d.h. eine 2.5D-Ansicht des Objektes bzw. des Oberflächenabschnitts von einem bestimmten Blickpunkt aus, bei welcher für jeden Datenpunkt dieser Ansicht ein Datensatz hinterlegt ist - ist der Ausgangspunkt für den fünften Verfahrensschritt 5, in welchem dann durch einen Vergleich mit einem Referenzmodell des Objektes bzw. Oberflächenabschnitts bzw. dessen Daten Veränderungen detektiert werden können. Je nach verfügbarer oder gewählter Sampling-Distanz bzw. -Rate werden die 2.5D-Ansicht und damit die Merkmalskarten-Darstellung mit einer entsprechenden Pixelgröße zur Verfügung gestellt. Mit einer feinen Pixelgröße können z.B. Veränderungen von Objektesdetails oder kleinen Ausschnitten genau ermittelt werden. Bei groben Sampling-Raten bzw. großer Pixelgröße ergeben sich implizit beispielsweise Überblicke von Objekten oder Oberflächenabschnitten mit geringen bis keinen Verzerrungen.

Im fünften Verfahrensschritt 5 werden dann die Datenattribute, welche in den Datensätzen der Datenpunkte des Objektes bzw. des Oberflächenabschitts - d.h. die Merkmalskarten-Darstellung - abgelegt sind, mit einem Referenzmodell des Objektes bzw. des Oberflächenabschnitts verglichen. Als Referenzmodell kann beispielsweise eine frühere Merkmalskarten-Darstellung des Objektes dienen. Für den Vergleich selbst können dann aufgrund der Darstellung in Form von Datensätzen beispielsweise Verfahren, Methoden und Algorithmen eingesetzt werden, welche z.B. bereits in der zweidimensionalen, digitalen Bildverarbeitung zum Einsatz kommen wie z.B. Klassifikationsalgorithmen zur Veränderungsanalyse bzw. zur so genannten Change Detection, etc. Es können z.B. auch so genannte Differenz-Metriken zum Einsatz kommen. Die Darstellung in Form von Merkmalskarten-Darstellungen bzw. als zweidimensionale Ansicht mit Datensätzen pro Datenpunkt kann in einem optionalen weiteren Verfahrensschritt dazu verwendet werden, eine effiziente Rückprojektion des Objektes bzw. gegebenenfalls auch einer festgestellten Veränderung in eine dreidimensionale Darstellung z.B. in einem 3D-Weltkoordinatensystem durchzuführen.

## Patentansprüche

1. Verfahren zur bildbasierten Veränderungserkennung bei dreidimensionalen Objekten und/oder Oberflächenabschnitten, wobei für einen bestimmten Zeitpunkt ein dreidimensionales Modell für ein Objekt aus mehreren Bilderaufnahmen generiert wird (2), und wobei für dieses Objekt ein Referenzmodell vorgesehen ist, **dadurch gekennzeichnet, dass** in Abhängigkeit von einem interessanten Ausschnitt des zu untersuchenden Objektes oder Oberflächenabschnitts oder in Abhängigkeit von einer geforderten Abtast-Distanz ein Blickpunkt auf das dreidimensionale Modell des Objektes definiert wird (3), dass für diesen Blickpunkt eine 2.5D-Ansicht des Objektes in Form eines kartesischen Datensatzes mit Datenattributen für jeden Datenpunkt generiert wird (4), in welchem neben zweidimensionalen Koordinatenwerten auch ein aus dem dreidimensionalen Modell abgeleiteter Farbwert und ein aus dem dreidimensionalen Modell abgeleiteter Tiefenwert als Datenattribute für den jeweiligen Datenpunkt erfasst werden, und dass dann jeweilige Datenattribute des jeweilige Datenpunktes aus dem Datensatz mit den entsprechenden Daten aus dem Referenzmodell verglichen wird (5).

2. Verfahren nach Anspruch 1, **dadurch gekennzeichnet, dass** für einen Vergleich der jeweiligen Datensätze der Datenpunkte mit den jeweiligen Daten aus dem Referenzmodell Klassifikationsalgorithmen zur Veränderungsanalyse bzw. zur so genannten Change-Detection verwendet werden (5) .

3. Verfahren nach einem der Ansprüche 1 bis 2, **dadurch gekennzeichnet, dass** für das Generieren der jeweiligen Datensätze mehrere dreidimensionale Modelle des Objektes herangezogen werden und vom gleichen Blickpunkt betrachtet werden, und dass dann die daraus abgeleiteten 2.5D-Ansichten übereinandergelegt und/oder fusioniert werden(3, 4).

4. Verfahren nach einem der Ansprüche 1 bis 3, **dadurch gekennzeichnet, dass** der Blickpunkt für das Generieren der zweidimensionalen Ansicht als virtuelle Kameraposition und/oder Benutzerblickrichtung auf das dreidimensionale Modell definiert wird (3).

5. Verfahren nach einem der Ansprüche 1 bis 3, **dadurch gekennzeichnet, dass** der Blickpunkt für das Generieren der 2.5D-Ansicht aus geschätzten Kamerapositionen ausgewählt wird (3).

6. Verfahren nach einem der Ansprüche 1 bis 5, **dadurch gekennzeichnet, dass** der Farbdatenwert im jeweiligen Datensatz des Datenpunktes der 2.5D-Ansicht als Hell-Dunkelwert oder als so genannter RGB-Wert abgelegt wird (4) .

## Claims

1. Method for image-based alteration recognition with three-dimensional objects and/or surface segments, wherein for a specific time instant a three-dimensional model is generated (2) for an object from a number of image recordings and wherein a reference model is provided for this object, **characterised in that** as a function of a cut-out of interest of the object or surface segment to be examined or as a function of a required scanning distance, a focal point is defined (3) on the three-dimensional model of the object, that for this focal point a 2.5D view of the object is generated (4) in the form of a Cartesian data record with data attributes for each data point, in which, aside from two-dimensional coordinate values, a colour value derived from the three-dimensional model and a depth value derived from the three-dimensional model are recorded as data attributes for the respective data point and that the respective data attribute of the respective data point from the data record is then compared (5) with the corresponding data from the reference model.

2. Method according to claim 1, **characterised in that** classification algorithms for alteration analysis or for what is known as change detection are used (5) for a comparison of the respective data records of the data points with the respective data from the reference model.

3. Method according to one of claims 1 to 2, **characterised in that** a number of three-dimensional models of the object are used for the generation of the respective data records and are taken into account from the same focal point and that the 2.5D views derived therefrom are then placed one above the other and/or fused (3, 4).

4. Method according to one of claims 1 to 3, **characterised in that** the focal point for the generation of the two-dimensional view is defined (3) as a virtual camera position and/or user viewing direction on the three-dimensional model.

5. Method according to one of claims 1 to 3, **characterised in that** the focal point for the generation of the 2.5D view is selected (3) from estimated camera positions.

6. Method according to one of claims 1 to 5, **characterised in that** the colour data value in the respective data record of the data point of the 2.5D view is stored (4) as a light/dark value or as what is known as an RBG value.

## Revendications

1. Procédé de détection de modification à partir d'images pour des objets tridimensionnels et/ou des sections de surface, dans lequel, pour un instant défini, un modèle tridimensionnel d'un objet est généré (2) à partir de plusieurs prises de vue, et dans lequel un modèle de référence prévu pour ledit objet, **caractérisé en ce que**, en fonction d'une partie extraite intéressante de l'objet ou de la section de surface à examiner ou en fonction d'une distance d'exploration souhaitée, un point de prise de vue est défini (3) sur le modèle tridimensionnel de l'objet, une vue en 2,5D de l'objet sous la forme d'un ensemble de données cartésiennes avec des attributs de données pour chaque point de données est générée (4) pour ledit point de prise de vue, au sein duquel, une valeur chromatique dérivée du modèle tridimensionnel et une valeur de profondeur dérivée du modèle tridimensionnel sont également enregistrées sous forme d'attributs de données pour le point de données respectif en plus des valeurs de coordonnées bidimensionnelles, et
des attributs de données respectifs du point de données respectif issus de l'ensemble de données sont ensuite comparés (5) avec les données correspondantes issues du modèle de référence.

2. Procédé selon la revendication 1, **caractérisé en ce que** des algorithmes de classification destinés à l'analyse de modification resp. à ce qu'on appelle la détection de dissimilarité sont utilisés (5) pour une comparaison des ensembles de données respectifs des points de données avec les données respectives issues du modèle de référence.

3. Procédé selon la revendication 1 ou 2, **caractérisé en ce que** plusieurs modèles tridimensionnels de l'objet sont exploités et sont considérés à partir du même point de prise de vue pour la génération des ensembles de données respectifs, et les vues en 2,5D qui en sont dérivées sont ensuite superposées et/ou fusionnées (3, 4).

4. Procédé selon l'une quelconque des revendications 1 à 3, **caractérisé en ce que** le point de prise de vue utilisé pour la génération de la vue bidimensionnelle est défini (3) en tant que position virtuelle de caméra et/ou direction virtuelle de regard d'utilisateur tourné(e) vers le modèle tridimensionnel.

5. Procédé selon l'une quelconque des revendications 1 à 3, **caractérisé en ce que** le point de prise de vue utilisé pour la génération de la vue en 2,5D est choisi (3) parmi des positions de caméra estimées.

6. Procédé selon l'une quelconque des revendications 1 à 5, **caractérisé en ce que** la valeur chromatique dans l'ensemble de données respectif du point de données de la vue en 2,5D est archivée (4) sous forme de valeur de clair-obscur ou sous forme de ce qu'on appelle la valeur RVB.
